# EUROPEAN PATENT APPLICATION

(11) **EP 1 739 497 A1**
(43) Date of publication of application: **03.01.2007**
(21) Application number: 06116005.7
(22) Date of filing: 23.06.2006
(51) Int. Cl.: G03G 15/00

(54) **Digital copier**

(30) Priority: 28.06.2005 KR 2005056433
(71) Applicant: Samsung Electronics Co., Ltd., Yeongtong-gu Suwon-city, Gyeonggi-do 442-742 (KR)
(72) Inventor: KWAK, Jin-geun, Gyeonggi-do (KR); SEO, In-sik, Gyeonggi-do (KR); SHIMURA, Michio, 411-1101, Cheongmyeong, Yeongtong-gu, Suwon-si, Gyeonggi-do (KR)
(74) Representative: Walaski, Jan Filip

(57) **Abstract**

A digital copier, including a display panel to display at least one menu to allow for a setting up of a copy function and to display a layout of copy output, a display controller which changes a screen displayed on the display panel according to a selection of a user and, when a function is set up by the user, performs control to display the layout of the copy output on the display panel based on the set-up copy function.

## Description

The present invention relates to a digital copy machine, also referred to as a digital copier, and a display controlling method thereof, and, more particularly, to a digital copy machine that shows a layout of copy output on a display panel after copy functions are set up by a user so as to make a copy in a layout desired by a user and to prevent wasteful consumption of paper and time caused by re-printing, and a display controlling method thereof.

Before digital copy machines came into wide use, main functions of copy machines were limited to paper size selection, paper type selection, sorted copying, page division copying, enlargement/reduction, output grouping, lightness adjustment, and the like. Recent developments in technology, however, have digitalized copy machines to provide not only diverse editing functions but also a stapling function to fasten copies together, a collating function and a hole punch function to make holes in copied documents for easy document binding.

The digital copy machines have now been provided with a plurality of buttons for function setup and a display panel to show the status of the digital copy machine and, possibly, the status of other copy machines as well. The numbers of the buttons have decreased as the digital copy machine has been advanced and as quality has been improved, and the display panel has been equipped with a touch screen. Thus, users have come to use digital copy machines more conveniently. With conventional copy machines, a user has to go through several operations of inputting data with the buttons to find a screen for a desired function on the display panel and set up the desired function. Then, the user has to come back to the initial screen again by shutting the function setup screen before he finally executes a copying operation. With this method, the user can see which function is set up from the display panel among a plurality of functions while he sets up the function, but he cannot come back to the initial screen because information on the set-up function is not displayed any more. For this reason, the user cannot know the layout of copy output until copying is executed. Thus, the copy output may be different from what is expected by the user due to a mistake or an error in data input.

Meanwhile, when a first user sets up the function of the digital copy machine, as described above, and then a second user comes to use the digital copy machine, the second user may not know the function setting status of the digital copy machine. So, it is highly likely that a copy may be outputted in a layout that is not desired by the second user because the copy is made based on the functions pre-set by the first user. In this case, the second user should re-set the functions of the digital copy machine or set up the functions of the digital copy machine again as he wishes. This not only wastes paper because a copy of undesired layout is outputted but also causes trouble and a waste of time because the second user is required to set up the functions of the digital copy machine and to make a copy again.

Therefore, a method that prevents wasteful consumption of paper and time and allows for a convenient use of the digital copy machine is required.

It is, therefore, an aspect of the present invention to provide a digital copy machine that prevents wasteful consumption of paper and time and allows for a convenient use of the digital copy machine, and a display controlling method thereof.

In accordance with an aspect of the present invention, there is provided a digital copy machine, comprising a display panel to display at least one menu to allow for a setting up of a copy function and to display a layout of copy output; a display controller which changes a screen displayed on the display panel according to selections of a user and, when a function is set up by the user, performs control to display the layout of the copy output on the display panel based on the set-up copy function.

The layout of copy output displayed on the display panel is shown in a form of an icon. When the icon for copy output layout is selected, the display controller displays the set-up function in a form of text.

In accordance with another aspect of the present invention, there is provided a method of controlling a display of a digital copy machine, comprising displaying at least one menu to allow for a setting up of copy functions; setting of a desired function from among the copy functions; changing a screen displayed on a display panel of the digital copy machine according to a selection of a user; and displaying an expected layout of copy output on the display panel based on the set-up function, after the function is set up by the user.

Additional and/or other aspects and advantages of the invention will be set forth in part in the description which follows and, in part, will be obvious from the description, or may be learned by practice of the invention.

Embodiments of the invention will now be described by way of example with reference to the accompanying drawings, in which:
Figure 1 is a block diagram showing a digital copy machine in accordance with an embodiment of the present invention;
Figure 2 is a plane view of a display panel showing an initial screen in accordance with an embodiment of the present invention;
Figure 3 is a plane view showing the display panel of Figure 2 displaying a submenu of a default menu;
Figure 4 is a plane view of the display panel showing a screen obtained when a sort key is selected among the submenu of the default menu of Figure 3;
Figures 5A to 5C are plane views of the display panel showing sequential screens when a page key is set up;
Figure 6 is a plane view of a display panel showing an initial screen with a copy output icon after a user completes function setup; and
Figure 7 is a flowchart describing a function setup process on a display panel in a digital copy machine in accordance with an embodiment of the present invention.

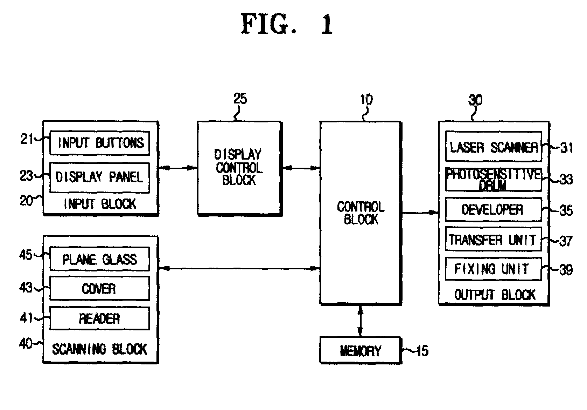

Referring to Figure 1, a digital copy machine according to an embodiment of the invention includes a scanning block 40 to scan a manuscript, an output block 30 to output a scanned copy of the manuscript, an input block 20 to allow for a setting up of functions of the digital copy machine, a memory 15, a display control block 25, and a control block 10.

The scanning block 40 includes a plane glass 45 where the manuscript is placed, a cover 43 to cover the plane glass 45, and a reader 41 to read out the manuscript. Herein, the reader 41 is formed of a Complementary Metal Oxide Semiconductor (CMOS) Image Sensor (CIS) or a Charge-Coupled Device (CCD). The reader 41 makes it possible to print out the manuscript by converting optical signals obtained by reading the manuscript into electric signals.

The output block 30 includes a laser scanner 31, a photosensitive drum 33, a developer 35, a transfer unit 37, and a fixing unit 39. The laser scanner 31 scans an image of the manuscript onto the photosensitive drum 33 with a laser, and the photosensitive drum 33 comes to have a changed electric potential as a result. The developer 35 develops the area where the electric potential of the photosensitive drum 33 is changed, and the transfer unit 37 transfers toner developed on the photosensitive drum 33 onto paper. The fixing unit 39 fixes the toner transferred onto the paper, or any other type of recording medium, with an application of heat and pressure.

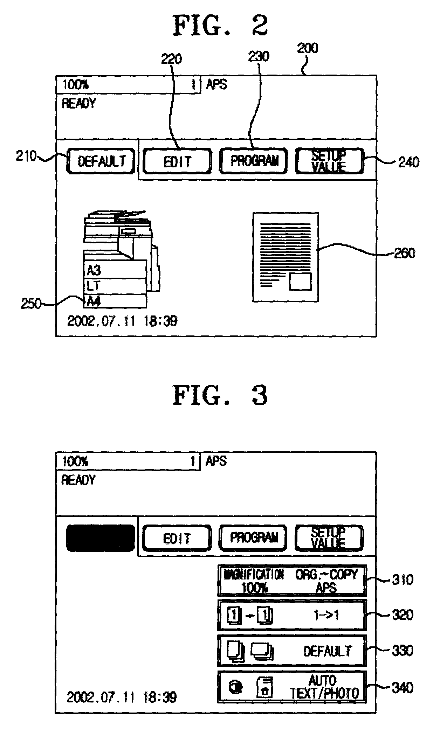

The input block 20 includes a plurality of input buttons 21 and a display panel 23. An example of a display panel in accordance with the present invention is shown in Figure 2. The input buttons 21 are a plurality of number buttons, a copy start button, and a function reset button. The display panel 23 is formed of a simple Liquid Crystal Display (LCD) or a touch screen panel. In the present embodiment, it is assumed that the display panel 23 is formed of a touch screen panel. Where the touch screen panel is not used, the input buttons 21 should include a menu selection button, a cancel button, a back button to allow the user to go back to a previous operation, and a function setup button in order to select a menu. However, the use of the touch screen panel makes those buttons unnecessary because they are displayed on the display panel 23.

The initial screen 200 of the display panel 23 shows a plurality of upper menu buttons 210, 220, 230 and 240 to allow for a selection of a function of the digital copy machine, a copy machine icon 250 embodying the digital copy machine, and a copy output icon 260 showing the layout of copy output.

The copy machine icon 250 shows paper trays of the digital copy machine and the size of paper contained in each paper tray. The paper tray currently in use is displayed in an inverse color. When a user selects the copy machine icon 250, buttons indicating diverse types of paper are displayed and the user may select the size of paper he wishes. When the user selects the size of paper he wishes, a paper tray containing paper of the size is then displayed in an inverse color.

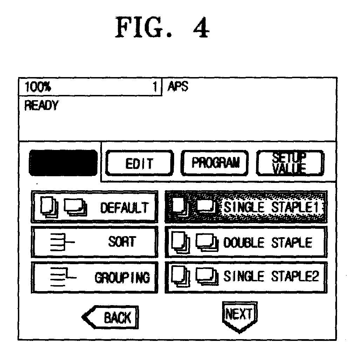

The upper menu buttons 210, 220, 230 and 240 include a 'default' menu button 210, an 'edit' menu button 220, a 'program' menu button 230, and a 'setup value' menu button 240. When the default menu button 210 is selected, as shown in Figure 3, the display panel 23 displays an enlargement/reduction key to allow for a setting of an enlargement/reduction function 310, a copy type selection key 320 to allow for a selection of the copy type among one-sided copy/both-sided copy/book copy modes, a sort key 330, and a text/photo selection key 340. When the sort key 330 is selected, as illustrated in Figure 4, a stapling function and/or a punching function may be selected to fasten copy materials together and/or to punch holes in the copy materials.

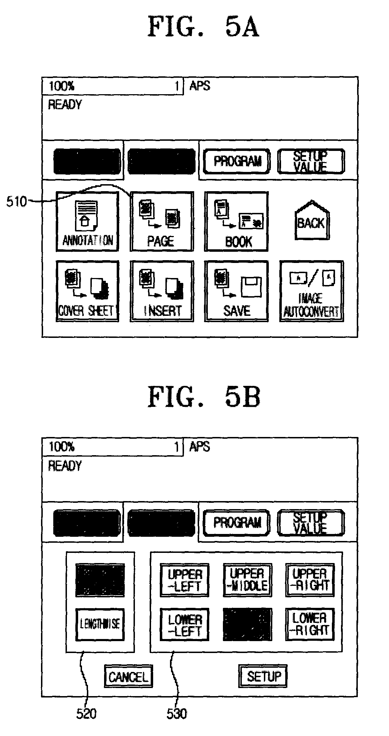

As shown in Figures 5A-5C, the 'edit' menu button 220 includes such submenu options as an annotation function, a paging function, a book format sort function, a cover sheet function, a paper insertion function, a document save function, and an image auto-conversion function. The 'program' menu button 230 includes an automatic/manual manuscript feeding function, a function of copying different sizes of manuscript, a memory mode copying function, a special paper copying function, and a time setting function.

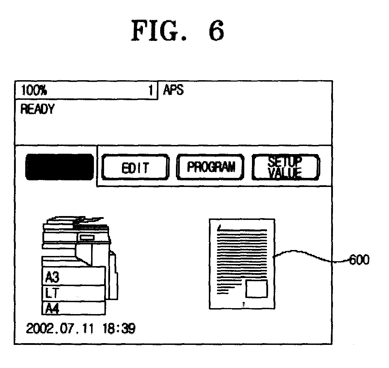

The copy output icon 260, as shown in Figure 2, is formed in a shape of rectangular documents, and displays the form of the copy output on the display panel 23 according to the set-up functions. For example, if a user selects the 'sort' key of the 'default' menu to set up a stapling function and selects the 'edit' menu to set up a paging function, as illustrated in Figure 6, a copy output icon 600 marked with the location of the staple and a page number is displayed on the display panel 23. When the copy output icon 600 is selected, the current function setup is displayed in the form of text. The memory 15 stores the functions set up by the user through the input buttons 21 and the display panel 23 (i.e., the memory 15 stores the layout of the copy output). The stored layout of the copy output is also changed when the function setup is changed or reset. The display control block 25 modifies and displays a screen to be shown on the display panel 23 according to selections of the user, when the user selects a function through the input buttons 21 and the display panel 23.

The control block 10 controls the operation of each constituent of the scanning block 40 and the output block 30 according to the function set up through the input block 20. For instance, when the size of paper is set up at A4 and changed into B3, the control block 10 adjusts the moving distance of the reader 41 according to B3, and changes a paper tray to be used for the B3 copying.

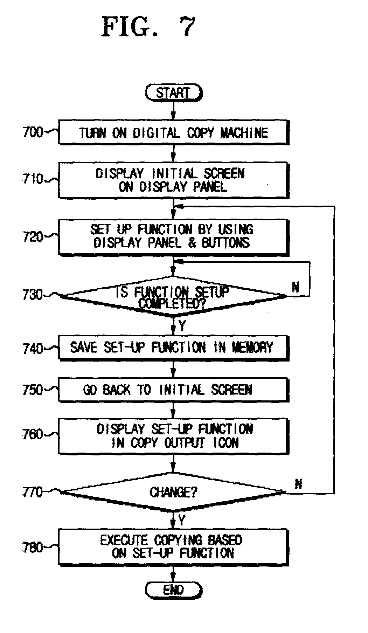

A process of setting up a function in a digital copy machine of the above-mentioned structure will now be described herein with reference to Figure 7. At operation 700, a user turns on a digital copy machine to make a copy of a manuscript. As illustrated in Figure 2, at operation 710, an initial screen 200 is displayed on a display panel 23. The initial screen 200 displays a copy machine icon 250 and a copy output icon 260 along with a plurality of menu buttons. Herein, the layout of copy output displayed in the copy output icon 260 may be pre-set by a previous user or a may be default layout. At operation 720, the user sets up the layout of the copy output by selecting menu buttons and functions through the display panel 23 and the input buttons 21. The display control block 25 displays a corresponding screen on the display panel 23 according to user selections.

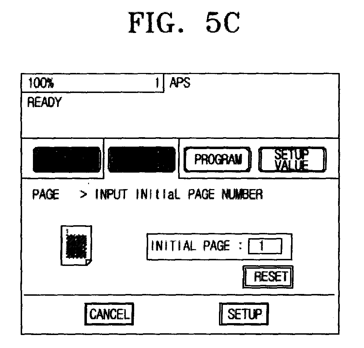

For example, as shown in Figure 3, the selection of the 'default' menu button 210 displays a enlargement/reduction key 310, a copy type selection key 320 to allow for a selection of a copying type among one-sided copying, both-sided copying and book copying, a sort key 330, and a text/photo key 340. When the sort key 330 is selected, a staple key and/or punch key are displayed. When the user selects the staple key, as illustrated in Figure 4, a single staple 1 key, a double staple key, and a single staple 2 are displayed. Each key shows the location of staple on a manuscript icon. When the user selects one of the keys, for example, the single staple 1 key, and then touches a back key, the display goes back to the initial screen 200.
When the user selects the 'edit' menu button 220 again in the initial screen 200, as illustrated in Figure 5A, a plurality of function keys are displayed. When the user selects a page key 510, as illustrated in Figure 5B, a pair of keys 520 to allow for a selection of a paper print direction and a plurality of keys 530 to allow for a selection of the print location of a page number are displayed. When the user selects breadthwise printing and the page numbers to be on the 'lower-middle area' and presses a 'setup' key, a screen to allow for an input of an initial page number on the manuscript is displayed as illustrated in Figure 5C. The function setup is completed by inputting the initial page number and then pressing the setup key. When the function setup is completed by the user at operation 730, at operation 740, the control block 10 saves the set-up layout format in the memory 15. Subsequently, at operation 750, when the user goes back to the initial screen 200 to execute copying, as illustrated in Figure 6, the copy output icon 600 in the initial screen 200 displays an expected layout of copy output based on the functions set up by the user. In short, the copy output icon 600 displays the location of the staple based on the staple function set up by the user and page numbers in the location also selected by the user. Herein, the user may confirm the functions he has set up in the form of text by selecting the copy output icon 600.

When the layout of copy output shown in the copy output icon 600 does not have a format that the user wishes, at operation 770, the user may change the function setup. When the user wants to set up the functions again, the logic flow of the method returns to operation 720 and repeats the process to operation 760. If there is nothing to be changed or the re-setup of functions is completed, at operation 780, the manuscript is copied based on the set-up functions.

As is described above, the functions set up by the user are displayed on the initial screen 200 of the digital copy machine in the form of an icon and they may be confirmed in the form of text according to user selections. The user may relatively easily ascertain the layout of the copy output based on the functions set up by the user. Thus, if there is any function the user does not wish to be in effect, the user may immediately change the function. Also, since the next user may relatively easily figure out the layout of the copy output set up by the previous user, it is possible to prevent a copy output of the second user from being printed out with a function which is not desired by the second user. Therefore, since a copy of a manuscript may be prevented from being outputted in a form not desired by the second user, it becomes possible to prevent wasteful paper consumption and to allow the user to conveniently use the digital copy machine by preventing time waste spent for re-printing. Meanwhile, although the copy output icons 260 and 600 are displayed on the initial screen 200 in the above describe embodiments, it is, of course, possible to separately provide a button to activate the copy output icons 260 and 600 and to display the copy output icons 260 and 600 only when the user presses the button.

As is described above, the technology of the present invention prevents wasteful use of paper and time and allows a user to operate the digital copy machine more conveniently.

Although a few embodiments of the present invention have been shown and described, it would be appreciated by those skilled in the art that changes may be made in these embodiments without departing from the scope of the invention as defined in the claims and their equivalents.

## Claims

1. A digital copier, comprising:
a display panel for displaying an expected layout of copy output; and
a display controller for changing the expected layout in response to copy functions selected by a user.

2. The digital copier of claim 1, wherein the layout of the copy output displayed on the display panel is shown in a form of an icon.

3. The digital copier of claim 2, wherein, when the icon for the copy output layout is selected, the display controller displays the set-up functions in the form of text.

4. A method of controlling a display of a digital copier, comprising:
displaying at least one menu to allow for a setting up of copy functions;
setting a desired function from among the copy functions;
changing a screen displayed on a display panel of the digital copier according to a selection of a user; and
displaying an expected layout of copy output on the display panel based on the set-up function, after the function is set up by the user.

5. The method of claim 4, wherein the displaying comprises displaying the layout of the copy output in a form of an icon.

6. The method of claim 5, wherein, when the icon for the copy output is selected, the displaying further comprises displaying the set-up function in a form of text.

7. A digital copier, in which a scanner scans a manuscript to be copied, and an output unit outputs a scanned copy of the manuscript, the digital copier comprising:
an input block to allow for a setting up of functions of the digital copier;
a memory to store the setup functions;
a display control block to modify and display a screen to show the setup functions; and
a control block to control the operation of the scanner and the output unit according to the setup functions.

8. The digital copier according to claim 7, wherein the input block comprises:
a plurality of input buttons including a plurality of number buttons, a copy start button, and a function reset button; and
a display panel formed of a Liquid Crystal Display (LCD) or a touch screen panel.

9. The digital copier according to claim 8, wherein an initial screen of the display panel shows a plurality of upper menu buttons to allow for a selection of a function of the digital copier, a copier icon embodying the digital copier, and a copy output icon showing a layout of copy output.

10. The digital copier according to claim 9, wherein the copier icon shows paper trays of the digital copier and a size of paper contained in each paper tray.

11. The digital copier according to claim 9, wherein the upper menu buttons include a default menu button, an edit menu button, a program menu button, and a setup value menu button.

12. The digital copier according to claim 11, wherein, when the default menu button is selected, the display panel displays an enlargement/reduction key to allow for a setting of an enlargement/reduction function, a copy type selection key to allow for a selection of a copy type among one-sided copy/both-sided copy/book copy modes, a sort key, and a text/photo selection key.

13. The digital copier according to claim 11, wherein, when the edit menu button is selected, the display panel displays submenu options including an annotation function, a paging function, a book format sort function, a cover sheet function, a paper insertion function, a document save function, and an image auto-conversion function.

14. The digital copier according to claim 11, wherein, when the program menu button is selected, the display panel displays submenu options including an automatic/manual manuscript feeding function, a function of copying different sizes of manuscript, a memory mode copying function, a special paper copying function, and a time setting function.

15. The digital copier according to claim 9, wherein the copy output icon displays a form of the copy output on the display panel according to the set-up functions.

16. The digital copier according to claim 15, wherein the copy output icon further displays a staple position and/or a page number position according to the set-up functions.

17. A method of operation of a digital copier, comprising:
displaying an initial screen, including menu buttons and a region in which a copy output icon is to be displayed;
allowing for a setup of copy functions via a use of the menu buttons;
determining whether the setup of the copy functions is complete;
if the setup of the copy functions is complete, displaying the initial screen with the copy output icon incorporating appearances of the copy functions;
determining whether a change of the copy functions is requested; and if a change is not requested, executing copying.

18. The method according to claim 17, wherein the displaying comprises saving the setup copy functions.
